# FASCICULE DE BREVET EUROPEEN

(11) **EP 1 272 026 B1**
(45) Date de publication et mention de la délivrance du brevet: **26.01.2005**
(21) Numéro de dépôt: 01921454.3
(22) Date de dépôt: 03.04.2001
(51) Int. Cl.: A01G 5/04

(54) **PROCEDE ET DISPOSITIF DE RECOLTE ET CONDITIONNEMENT DE FLEURS FRAICHES COUPEES**
VERFAHREN UND VORRICHTUNG ZUM ERNTEN UND KONDITIONIEREN VON FRISCHEN SCHNITTBLUMEN
METHOD AND DEVICE FOR COLLECTING AND PACKAGING FRESH-CUT FLOWERS

(30) Priorité: 07.04.2000 FR 0004523
(43) Date de publication de la demande: 08.01.2003
(73) Titulaire: World Flowers Creative et Services, 83320 Carqueiranne (FR)
(72) Inventeur: BOUISSON, Marc, F-83320 Carqueiranne (FR)
(74) Mandataire: Domange, Maxime
(86) Numéro de dépôt international: PCT/FR2001/000987
(87) Numéro de publication internationale: WO 2001/076354

(56) Documents cités:
- EP-A- 0 586 836
- GB-A- 2 245 168
- US-A- 5 673 511
- US-A- 5 758 452
- US-A- 5 927 009

## Description

La présente invention concerne un petit bouquet conditionné de fleurs fraîches coupées, ainsi qu'une caisse de transport et présentoir de petits bouquets selon l'invention. La présente invention concerne également un procédé de récolte de fleurs fraîches coupées ainsi qu'un bac de ramassage utile dans ledit procédé de récolte.

La présente invention concerne enfin un procédé de conditionnement d'un petit bouquet de fleurs fraîches coupées.

Lors de la récolte, les fleurs fraîches sont coupées à un stade où les boutons floraux sont en début d'épanouissement. La fleur coupée ne dispose pour achever sa maturation que de l'eau qu'on lui apporte et des réserves nutritives que renferme sa tige florale. C'est pourquoi on commercialise actuellement de préférence des fleurs et plantes à grandes tiges, en général d'au moins 40 cm, de préférence au moins 60 cm.

Toutefois, ce type de récolte implique une faible rentabilisation des cultures florales. En effet, on coupe la tige dès qu'apparaît un bouton principal au stade de maturité adéquat, de préférence en début d'épanouissement de la corolle. Mais, des tiges de cette taille comportent plusieurs autres boutons floraux, ou sont susceptibles de donner naissance à plusieurs boutons floraux portés sur les différentes ramifications de la tige. Toutefois, ces autres boutons portés par la tige sont à un stade trop précoce de maturation lorsqu'ils sont coupés pour pouvoir s'épanouir ultérieurement, et sont donc de ce fait perdus.

Habituellement, après leur récolte, les fleurs coupées sont transportées à sec ou humidifiées et ce n'est que chez le fleuriste, et dans tous les cas chez le consommateur final que les bouquets sont constitués. On sait que toute manipulation des fleurs fraîches coupées, telle que la constitution de bouquets, est dommageable, car elle constitue une agression pour la plante et en accélère sa sénescence. Par ailleurs, les fleurs sont des organismes biologiques fragiles, et leur récolte comme leur stockage, en attente de conditionnement, nécessitent des mesures de protection et des mesures prophylactiques strictes.

Diverses causes peuvent accélérer le vieillissement des fleurs coupées :
- le blocage vasculaire lié à un déficit hydrique et,
- l'excès de production d'éthylène, laquelle peut être engendrée par tout contact intempestif avec la fleur, notamment avec son extrémité fleurie comprenant la corolle.

Pour lutter contre le déficit hydrique, on connaît des blocs de mousse, matériau solide que l'on place dans le fond d'un vase et dans lequel les tiges inférieures des fleurs sont piquées. Le matériau est imbibé d'eau, laquelle est absorbée par le bloc de mousse et permet la nutrition du bouquet, notamment pendant une phase de transport. On connaît de nombreux emballages protecteurs de fleurs pour en faciliter le transport, le stockage et permettre plus généralement d'allonger la durée de vie des fleurs.

Le problème à la base de la présente invention est donc de fournir un nouveau procédé de récolte et d'exploitation de fleurs fraîches coupées permettant :
- de rentabiliser davantage les cultures florales,
- de minimiser les manipulations desdites fleurs après leur récolte, jusqu'à leur destination finale chez le consommateur,
- et plus généralement de préserver l'intégrité desdites fleurs après leur récolte pendant leur stockage et transport.

Pour ce faire, selon un premier aspect, la présente invention a pour objet le procédé de récolte de fleurs fraîches coupées, caractérisé en ce que dans une première étape, on coupe des petites fleurs avec une tige comprenant un unique bouton floral au stade de début d'épanouissement de la corolle, et dont la longueur de tige est inférieure à 10 cm, de préférence inférieure à 5 cm, de préférence encore la longueur de la tige étant d'au moins 4 cm.

Dans le procédé de récolte selon l'invention, le choix de la ou des fleurs s'exerce donc à la fois sur la longueur de la tige et l'état de maturité de chacune d'entre elles.

Dans une deuxième étape, on constitue aussitôt après leur récolte lesdits petits bouquets avec au moins trois desdites petites fleurs coupées dont les tiges sont sensiblement de même longueur, et comprenant de préférence de 4 à 6 fleurs, en ligaturant les tiges en faisceau.

Dans un mode de réalisation avantageux, on coupe successivement plusieurs fleurs sur un même pied de culture, de préférence sur les différentes ramifications d'une même tige principale dudit pied, au fur et à mesure de l'apparition desdits boutons floraux audit stade de début de l'épanouissement de la corolle.

En échelonnant ainsi la récolte des différents boutons floraux sur une même tige ou un même rameau, c'est à dire sur les différentes ramifications d'une même tige de la plante, on peut ainsi récolter plusieurs fleurs fraîches coupées, notamment en général au moins quatre par rameau au stade approprié d'épanouissement et non pas une seule comme dans les cultures traditionnelles, comme mentionné précédemment, ce qui constitue un moyen essentiel de rentabilisation de la culture florale sous serre ou de plein champ des horticulteurs traditionnels et la création de nouveaux modes d'exploitation des produits de la récolte, comme il sera explicité ci-après.

Comme mentionné ci-dessus, la constitution des petits bouquets de fleurs fraîches coupées est effectué au stade de la récolte. Pour ce faire, de préférence, on met en place lesdits petits bouquets, dont les tiges ont été ligaturées en faisceau dès la récolte, dans des bacs de ramassage comportant des compartiments individualisés, calibrés de façon à recevoir chacun un petit bouquet. Ces compartiments permettent de maintenir les tiges desdits petits bouquets dans l'eau, et leurs extrémités fleuries espacées pour éviter des contacts entre les bouquets, et permettent aussi le calibrage visuel de chacun des bouquets ainsi constitués sans avoir recours à une mesure particulière.

Dans ladite première étape du procédé de récolte, on récolte des fleurs sur des plantes sélectionnées pour donner des corolles de dimension réduite, de préférence de plus grande dimension en début d'épanouissement de la corolle, inférieure à 3 cm. Ce choix d'espèces florales adaptées permet de constituer des petits bouquets de quatre à six fleurs sans nécessité de serrer excessivement et donc d'agresser par contrainte mécanique les extrémités fleuries desdites fleurs.

De préférence encore, on coupe des fleurs sur des plantes à tige ramifiée, de préférence sélectionnées pour fournir un nombre accru de ramifications. Cette dernière caractéristique est doublement avantageuse, car les plantes à tige à ramification amplifiée donnent naissance à des fleurs à corolles de dimensions plus réduites. On récolte des fleurs de plantes choisies parmi les espèces florales comprenant des roses, oeillets, mimosas, renoncules, violettes, astomerias, bleuets chrysanthèmes, matricaires et gouttes de sang.

Selon un second aspect, la présente invention a également pour objet un bac de ramassage de fleurs fraîches coupées utile dans le procédé de récolte selon l'invention, caractérisé en ce qu'il comprend une caisse en matière plastique rigide empilable comprenant un élément réceptacle de calibrage amovible et jetable comprenant des compartiments individualisés de dimensions calibrées en hauteur et en largeur pour recevoir chacun undit petit bouquet et lesdits compartiments sont espacés de manière à permettre une bonne circulation d'air entre les extrémités fleuries desdits petits bouquets.

Dans un mode préféré de réalisation du bac de ramassage selon l'invention, lesdits compartiments communiquent entre eux de manière à permettre une circulation d'eau entre les compartiments lorsqu'ils sont remplis d'eau.

Plus particulièrement, lesdits compartiments définissent un plan comprenant des orifices de préférence encore circulaires, de sorte que lorsque lesdites tiges desdits bouquets sont introduites dans lesdits orifices, lesdits boutons floraux dépassent au-dessus dudit plan et peuvent reposer sur une partie pleine dudit plan entourant lesdits orifices. Le diamètre des compartiments est donc inférieur à celui du volume occupé par l'ensemble des extrémités fleuries du bouquet. Le diamètre des compartiments est en particulier inférieur à 10 cm, de préférence encore inférieur à 5 cm.

Dans un mode de réalisation avantageux, ledit élément de calibrage comprend une plaque ou feuille de matériau plastique dans laquelle des compartiments de type godet, reposant sur le fond de ladite caisse, sont thermo-formés.

Selon un troisième aspect, la présente invention fournit un petit bouquet de fleurs fraîches conditionné, caractérisé en ce qu'il comprend un petit vase comprenant un bouchon traversé par au moins trois tiges de petites fleurs fraîches coupées, de préférence de 4 à 6 petites fleurs, dont la longueur de tige est inférieure à 10 cm de préférence inférieure à 5 cm, de préférence encore inférieure à 4 cm et dont la corolle est de dimension réduite, de préférence de plus grande dimension inférieure à 5 cm.

Selon une autre caractéristique de l'invention, ledit petit vase est rempli d'un matériau solide hydrophile retenant l'eau à l'intérieur dudit vase, ledit matériau se présentant sous forme de particules.

Ce type de petit bouquet offre la possibilité nouvelle de bénéficier d'un véritable bouquet de fleurs dans un très grand nombre de circonstances où un bouquet de dimension normale serait exclu. Il multiplie donc les possibilités d'exploitation de bouquets de fleurs fraîches coupées. En outre, de par sa taille réduite, ce type de petits bouquet peut être plus facilement transporté par le consommateur, qui peut en transporter plusieurs sans difficulté, ce qui contribue également à en faciliter et augmenter la commercialisation.

On peut citer parmi les circonstances nouvelles d'utilisation de bouquets de fleurs liées au faible encombrement dudit bouquet selon l'invention les suivantes à titre illustratif :
- lors d'un dîner, un invité peut offrir un bouquet à chaque convive, ou la maîtresse de maison peut en disposer sur la table pour la décorer, chaque convive repartant avec son petit bouquet,
- dans tous les lieux, notamment les lieux de travail, où la place manque pour recevoir les grands bouquets traditionnels,

La présente invention permet également d'exploiter des bouquets à plus faible coût, et rendre ainsi les occasions de commercialisation plus fréquentes. En particulier, des enfants ayant un budget réduit peuvent offrir un vrai petit bouquet, au lieu d'une fleur unique pour la fête des mères ou pour un anniversaire.

Du fait que le bouquet est pré-constitué et conditionné avant sa vente, le circuit de distribution ne passe plus uniquement par le fleuriste traditionnel, mais par des circuits dont la situation favorise l'achat impulsif et où l'essentiel des ventes est l'achat occasionnel, tel que dans les gares, les aéroports, les cliniques et les hôpitaux.

En effet, les maternités et les hôpitaux pourraient permettre sa mise en place sur les tables de nuit, alors que les grands bouquets sont refusés, notamment en raison de problèmes bactériens.

Les bouquets selon l'invention sont plus fragiles que des bouquets à longues tiges du fait que la petitesse de leur tige, et donc de leur réserve en eau, les rend beaucoup plus sensible à un déficit hydrique. Leur manutention risque davantage d'affecter leur résistance. C'est pourquoi les caractéristiques de conditionnement de la présente invention apparaissent essentielles pour permettre une conservation et des qualités de floraison comparables à celles d'un bouquet de grande taille. Il s'est en particulier avéré nécessaire de prévoir une réserve d'eau dès la récolte, et même sous forme de vase pendant leur transport et stockage, et de préférence de les protéger avec un étui, créant ainsi un microclimat ou effet de serre propice à sa conservation. D'autre part, le bouchon permet de maintenir l'eau dans le vase durablement, en effaçant tout risque de vidange de l'eau en cas de basculement. Le conditionnement selon la présente invention prend donc en compte à la fois les impératifs biologiques pour maintenir le plus longtemps possible les plantes en l'état de floraison par une conservation dans l'eau et, de préférence, une bonne ventilation, et les impératifs de transport avec un bouchon empêchant que l'eau ne se répande en cas de mauvaise manipulation et risque de renversement d'eau.

Plus particulièrement, ledit matériau solide retenant l'eau est un matériau hydrophile synthétique poreux ou cellulaire capable de retenir un volume d'eau d'au moins 70 %, de préférence au moins 90 % du volume extérieur apparent du matériau solide sec.

Le matériau solide, à la fois constitue un réservoir d'eau pour alimenter les fleurs et contribue à empêcher que l'eau ne se vide hors du vase en cas de basculement du vase, mais aussi limite au maximum l'évaporation de l'eau. Enfin, en plus de sa fonction anti-débordement, le matériau solide, de par sa présentation sous forme particulaire, contribue notablement à la prise d'assiette du bouquet et à son calage et maintien dans le vase de façon stable.

Pour ne pas induire un tassement du matériau solide excessif, qui nuirait à la pénétration des tiges dans le vase, on remplit celui-ci au 3/4 seulement de matériau de particules. Pour ce faire également, on met en oeuvre desdites particules qui se présentent sous forme de copeaux ou bâtonnets allongés.

Pour remplir ces différentes fonctions, il est préférable que ledit matériau se présente sous forme de particules, et notamment ledit matériau solide se présente sous forme de particules ayant de préférence une plus grande dimension de longueur moyenne 2 à 20 mm, de préférence encore de 5 à 10 mm. Il s'agit ici des dimensions des particules in situ dans le vase. Mais ces particules sont en général obtenues à partir de bâtonnets de plus grande dimensions, notamment de 10 à 30 mm de longueur, dans la mesure où ces bâtonnets se brisent lors de leur introduction ou après leur introduction dans le vase.

Avantageusement, ledit matériau solide peut être une mousse de matière synthétique hydrophile notamment de type phénolique, telle qu'à base de polyuréthane, phénol-formaldéhyde, ou de type urée- formaldéhyde, ou polystyrol. Ce type de matériau est connu sous le nom de « mousse florale » ou « mousse pique fleur» ou « mousse phénolique à cellules ouvertes », et sont notamment commercialisées sous les marques « OASIS ®» par la société SMITHERS OASIS et « FLORIDE ® » par la société SAITEC.

Dans un mode de réalisation préféré, le bouchon comprend un élément retenant l'eau constitué d'un bloc dedit matériau solide retenant l'eau. Plus particulièrement, ledit bloc de matériau solide retenant l'eau est inséré dans une dite capsule qui lui sert de réceptacle et assure l'étanchéité entre le vase et le bouchon.

Dans un mode de réalisation avantageux, ledit bouchon comprend une capsule comprenant des rebords latéraux assurant l'étanchéité entre le vase et le bouchon, et le fond de ladite capsule comprend au moins un orifice central traversé par lesdites tiges.

De préférence encore, ladite capsule comprend des rebords latéraux qui coopèrent élastiquement de façon étanche avec l'intérieur du col dudit vase, et le fond de ladite capsule comporte des fentes ou des lignes prédécoupées disposées radialement autour d'un orifice central permettant audit fond de s'entrouvrir élastiquement pour permettre le passage desdites tiges dans ledit vase. Cet orifice central du bouchon permet de préserver les tiges en évitant toute agression mécanique lors de leur insertion dans le vase. L'orifice permet également de caler le haut des tiges et permet en outre de remplir le vase d'eau quand toute l'eau est évaporée. Pour ce faire, on immerge alors le vase dans un récipient rempli d'eau jusqu'au dessus du col du vase sans immerger complètement les corolles.

De préférence, ledit bloc de matériau solide retenant l'eau est percé en son centre pour permettre le passage desdites tiges.

Selon une variante préférée de réalisation, le petit bouquet conditionné selon l'invention comprend les caractéristiques suivantes :
- une enveloppe qui protège l'extrémité fleurie comprenant les corolles dudit petit bouquet,
- un socle sur lequel est adapté ledit vase de manière à le stabiliser,
- de préférence, l'enveloppe coiffe ledit petit bouquet et coopère avec ledit socle,
- avantageusement, ladite enveloppe est en forme de boîte parallélépipédique dont les parois latérales s'ajustent sur les bords latéraux dudit socle,
- ladite enveloppe peut comprendre des moyens de préhension,
- ladite enveloppe comporte avantageusement des percements dans sa partie supérieure en regard desdites extrémités fleuries. Ces percements permettent d'une part une bonne ventilation des extrémités fleuries du bouquet, ce qui permet de préserver le bouquet d'un vieillissement précoce, dû au dégagement d'éthylène qui resterait confiné dans l'enveloppe. Ce percement peut également faire office de moyen de préhension de l'enveloppe.

Dans un mode de réalisation particulier, ladite enveloppe coopère élastiquement avec ledit socle ou ledit vase de manière à permettre la préhension du petit bouquet conditionné par l'intermédiaire de l'enveloppe sans que ledit vase et le cas échéant ledit socle ne s'en désolidarise.

Selon un quatrième aspect, la présente invention a pour objet une caisse de transport contenant des petits bouquets conditionnés selon l'invention et transformable en présentoir, caractérisée en ce qu'elle comprend un couvercle repliable sur lui-même lorsqu'il est ouvert et que la caisse est transformée en présentoir, des percements dans le couvercle et ses parois latérales et un support intérieur comprenant des alvéoles permettant de caler et d'espacer lesdits petits bouquets conditionnés selon l'invention, lorsqu'ils sont mis en place dans lesdites alvéoles.

Enfin, la présente invention a selon un cinquième aspect pour objet procédé de conditionnement d'un petit bouquet récolté selon un procédé selon l'invention, caractérisé en ce que :
1) on remplit un dit vase avec dudit matériau solide capable de retenir de l'eau et de l'eau,
2) on met en place sur ledit vase undit bouchon,
3) on met en place ledit petit bouquet ligaturé en faisceau à l'intérieur dudit vase à travers ledit bouchon, de façon à lui conférer une bonne assiette,
4) et le cas échéant, on met en place ledit vase sur un dit socle,
5) on met en place une dite enveloppe de protection sur ledit petit bouquet, et
6) de préférence on met en place lesdits petits bouquets conditionnés obtenus à l'étape 5) dans desdites caisses de transport servant de présentoir.

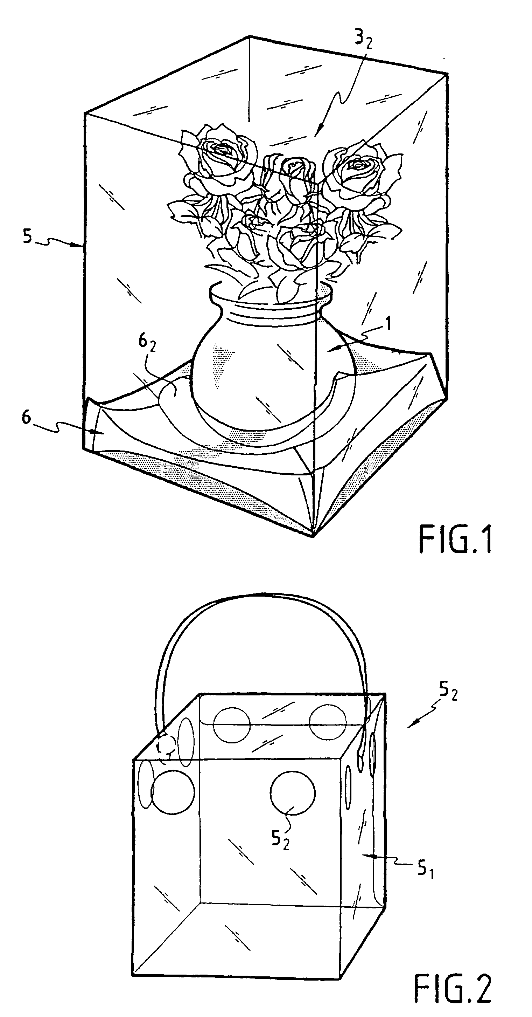

D'autres caractéristiques et avantages de la présente invention apparaîtront à la lumière de la description détaillée du mode de réalisation qui va suivre, faite en référence aux figures 1 à , dans lesquelles :
- La figure 1 représente un petit bouquet conditionné selon l'invention, comprenant un petit bouquet dans un vase avec un étui composé d'une enveloppe et d'un socle ;
- La figure 2 représente une vue en perspective de l'enveloppe, comprenant des percements d'aération et des percements avec un cordon de transport ;

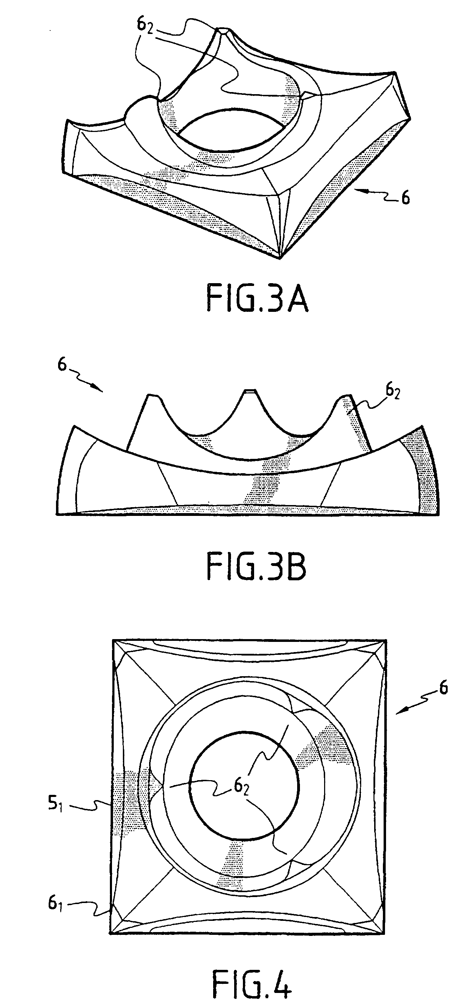

- La figure 3a représente une vue en perspective du socle seul;
- La figure 3b représente une vue de côté du socle seul ;
- La figure 4 représente une vue de dessus en plan de l'enveloppe ajustée sur le socle ;

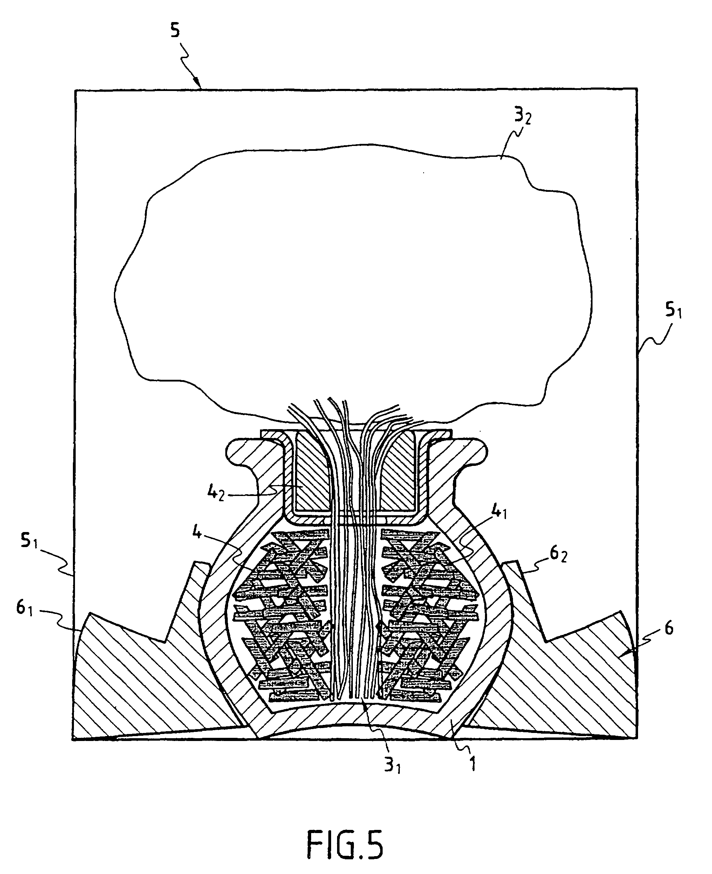

- La figure 5 représente une vue en coupe d'un petit bouquet conditionné selon l'invention, comprenant un vase rempli de copeaux adapté sur un socle et recouvert d'une enveloppe protectrice ;
- La figure 6 représente une vue en coupe d'une capsule du bouchon adapté sur le col du vase ;
- La figure 7 représente une vue de dessus d'une capsule d'un bouchon selon l'invention ;
- La figure 8 représente une vue en coupe d'un bouchon comprenant une capsule et un élément retenant l'eau en l'absence de bouquet ;
- La figure 9 représente une vue en coupe d'un bouchon selon l'invention traversé par des tiges d'un petit bouquet ;
   Les figures 10 et 11 représentent un second mode de réalisation du bouchon, dans lequel la capsule présente uniquement un grand orifice central dans le fond, sans le bouquet (figure 10) et avec le bouquet introduit (figure 11).

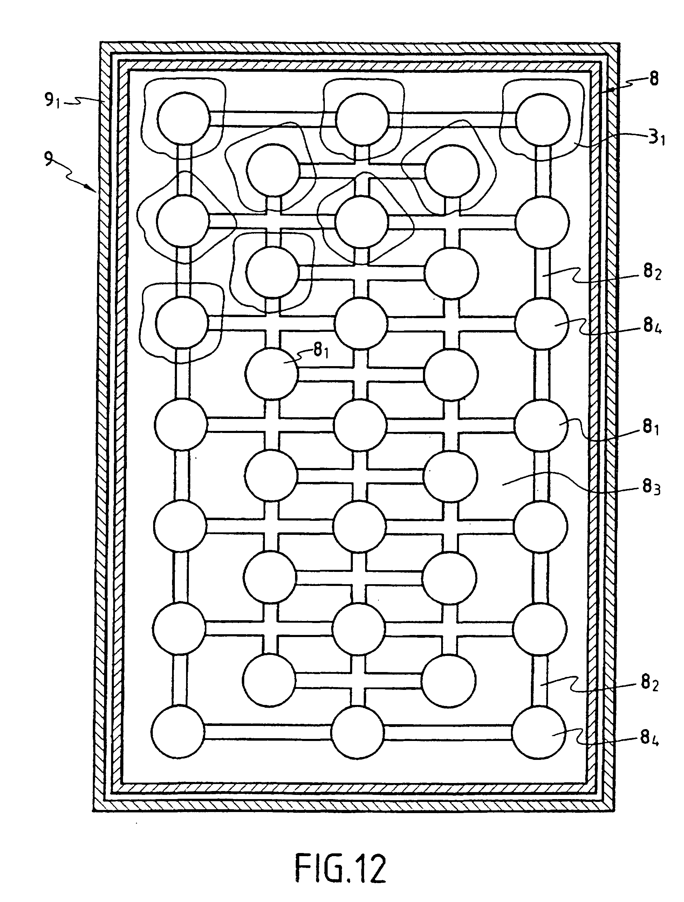

- La figure 12 représente un bac de ramassage selon l'invention vu de dessus ;

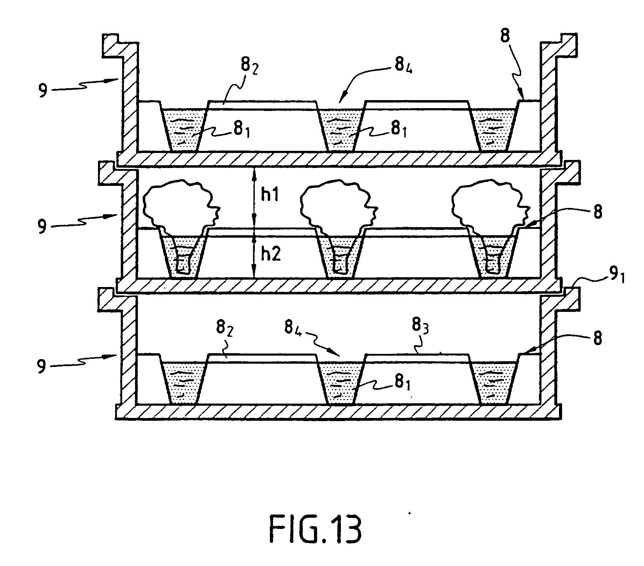

- La figure 13 représente plusieurs bacs de ramassage selon l'invention, empilés les uns sur les autres en vue en coupe au niveau des compartiments ;

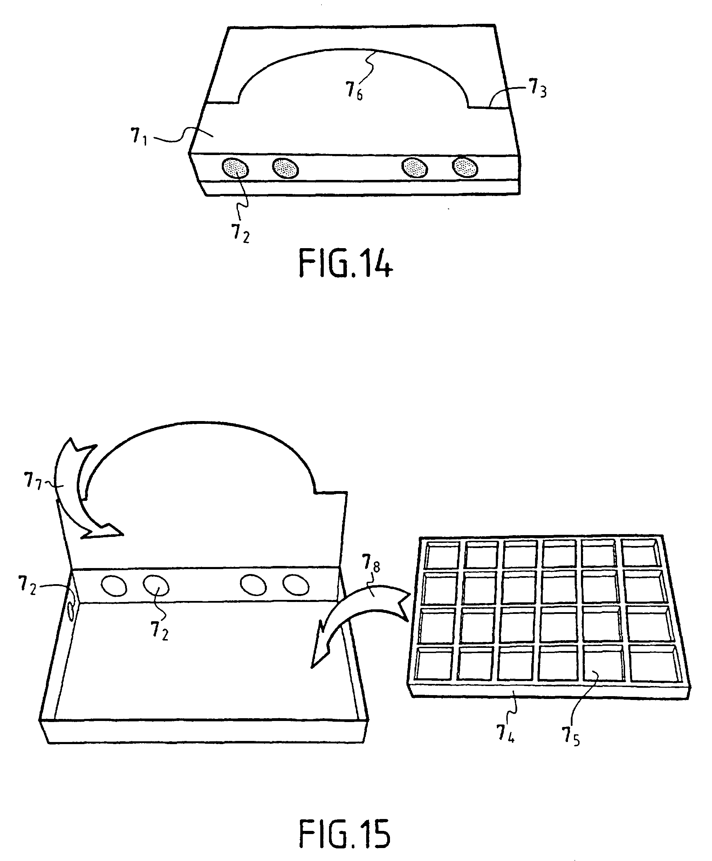

- Les figures 14 et 15 représentent des vues en perspective d'une caisse de transport d'un petit bouquet selon l'invention, respectivement avec le couvercle fermé (figure 14), le couvercle ouvert et le couvercle complètement ouvert et replié sur lui-même pour servir de présentoir (figure 15).

La sélection des fleurs à couper lors de la récolte doit s'exercer à la fois sur la longueur de la tige, sur l'état de maturité et sur le volume des boutons floraux, car le bouquet est constitué et ligaturé en faisceau dès le stade de la récolte. Pour permettre de constituer un bouquet d'au moins trois fleurs, de préférence de 4 à 6 fleurs, et donc pour permettre le nécessaire calibrage de la taille des bouquets, l'invention requiert la mise en oeuvre d'espèces florales adaptées, présentant des caractéristiques suivantes :
- l'extrémité fleurie comprenant la corolle (3₂) de chacune desdites fleurs (3) occupe une surface dans la direction des fleurs adjacentes inscrite dans un cercle de diamètre inférieur au 2/3 de la longueur de ladite tige (3₁), de préférence inférieure à 5 cm.
- le volume de l'ensemble des extrémités fleuries comprenant les corolles (3₂) dudit petit bouquet s'inscrit dans un cercle de diamètre inférieur à deux fois la longueur desdites tiges (3¹), de préférence inférieure à 10 cm.

De préférence, les fleurs ont été récoltées à un stade de début d'épanouissement de la corolle, pour éviter que la tige ne continue de croître après leur récolte, comme c'est le cas lorsque les fleurs sont récoltées à un stade plus précoce.

Pour faciliter ce calibrage de la taille du bouquet, en volume de fleurs et longueur de tiges, on utilise un bac de ramassage comprenant un élément réceptacle de calibrage amovible et jetable 8. Cet élément réceptacle 8 est inséré dans une caisse en plastique 9 empilable. Cet élément réceptacle 8 est une pièce thermoformée reposant sur le fond de la caisse 9 formant des compartiments 8₁ en forme de godet. Pour les longueur de tiges à la récolte de 48 mm, pour la constitution de bouquets dont le volume des extrémités fleuries sera coiffé dans une enveloppe parallélépipédique de 80 x 80 mm telle que décrite ci-après, les godets ont par exemple une profondeur h₂ de 48 mm, une forme conique avec une petite base au fond de 23 mm de diamètre et une grande base constituant l'orifice supérieur de 35 mm de diamètre. Les orifices des godets sont espacés de manière à ce que la distance entre leurs centres soit au moins égale à la largeur de l'enveloppe requise pour coiffer les bouquet, notamment une distance de 80 mm. On réalise en particulier un élément thermo-formé de 33 godets.

Ce bac de ramassage 9 avec l'élément réceptacle 8 participe à la conservation optimale des bouquets et à la garantie de mesure prophylactique, car les godets sont remplis d'eau comprenant une solution de conservation avec des éléments nutritifs et antibiotiques d'une part, et d'autre part l'élément réceptacle 8 doit être éliminé après chaque usage pour éviter une contamination éventuelle provenant d'une récolte antérieure. Il y a lieu de noter, à ce propos, que la caisse 9 dans laquelle l'élément de calibrage est inséré n'est pas en contact avec l'eau de conservation des bouquets. Le matériau plastique constitutif de l'élément de calibrage 8 est destiné à être détruit après usage, ou soumis à des lavages désinfectants de sorte qu'il sera utilisé un matériau plastique dépourvu de chlore.

Les différents compartiments-godets 8₁ communiquent les uns avec les autres 8₂, notamment par des rigoles ou rainures en surface pour assurer une circulation d'eau entre les compartiments 8₁ évitant ainsi la formation de vagues ou remous ou à tout le moins les atténuant, lors des opérations de manipulation et de transport du bac après récolte.

Les caisses 9 destinées à recevoir les éléments de calibrage 8 sont prévues pour permettre l'empilement ou le gerbage des caisses. Celles-ci comportent donc un épaulement 9₁ dans leur partie supérieure à cet effet. La hauteur (h₁ + h₂) des caisses 9 est telle que la hauteur (h₁) au-dessus de l'élément de calibrage 8 reposant dans le fond de la caisse 9 est supérieure à la hauteur du volume occupé par l'extrémité fleurie comprenant l'ensemble des boutons floraux du bouquet. Pour des tiges de 48 mm, une hauteur de caisse (h₁ + h₂) d'au moins 10 mm est donc requise.

Les godets 8₁ sont remplis au 3/4 d'eau pour éviter les débordements d'eau lors des manipulations de la caisse de récolte.

Les petites fleurs coupées selon l'invention sont potentiellement plus fragiles que les fleurs coupées à grandes tiges. C'est pourquoi leur récolte, comme leur stockage en attente de conditionnement, requièrent des mesures prophylactiques très strictes auxquelles les bacs de ramassage 9 selon l'invention contribuent.

Après la coupe et le ramassage des fleurs, puis la constitution des bouquets et mise en attente de ceux-ci dans les éléments réceptacle 8 remplis d'eau et de conservateur, les bacs sont transportés dans un centre de conditionnement en chambre froide. La réfrigération est nécessaire pour ralentir le processus de vieillissement des fleurs coupées.

Les vases 1 sont remplis de copeaux 4₁ de 10 à 30 mm de longueur initiale, débités dans des blocs solides de matériau retenant l'eau constitués de mousse phénolique artificielle commercialisée par la société SMITHERS OASIS sous la marque « OASIS ® » ou par la société SAITEC sous la marque « FLORIDE ® », notamment une mousse d'environ 20 kg/m³ de densité.

Le vase 1 est rempli environ au 3/4 de copeaux 4₁ sans les tasser. Puis il est rempli entièrement d'eau. Le matériau solide utilisé pour réaliser les copeaux est capable de contenir 90 % de son volume apparent en eau. Pour les longueurs de tiges de 48 mm en moyenne, on utilise un vase de hauteur légèrement supérieur à la longueur des tiges, avec un col de diamètre interne correspondant sensiblement à celui de la base des godets 8₁, soit environ 25 mm. Le vase présente une base aplatie permettant au consommateur final de le mettre en place sans son socle stabilisateur 6 décrit ci-après.

Les quantités de copeaux et d'eau mises en oeuvre sont telles qu'après remplissage d'eau, le vase n'apparaît pas comme entièrement rempli de copeaux. Ce n'est qu'avec l'introduction des tiges dans le vase, que le volume d'eau et de copeaux affleure la base du col 1₁ dudit vase.

Une fois introduit dans le vase, la longueur des copeaux est de 3 à 8 mm.

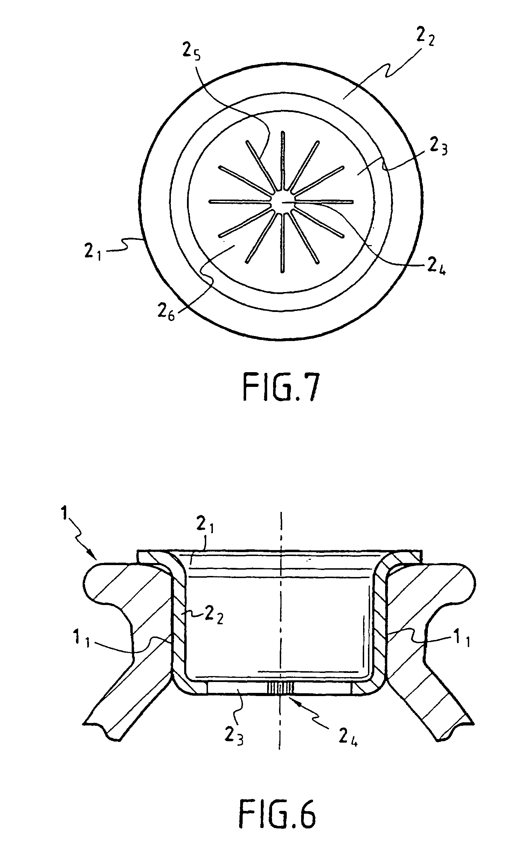

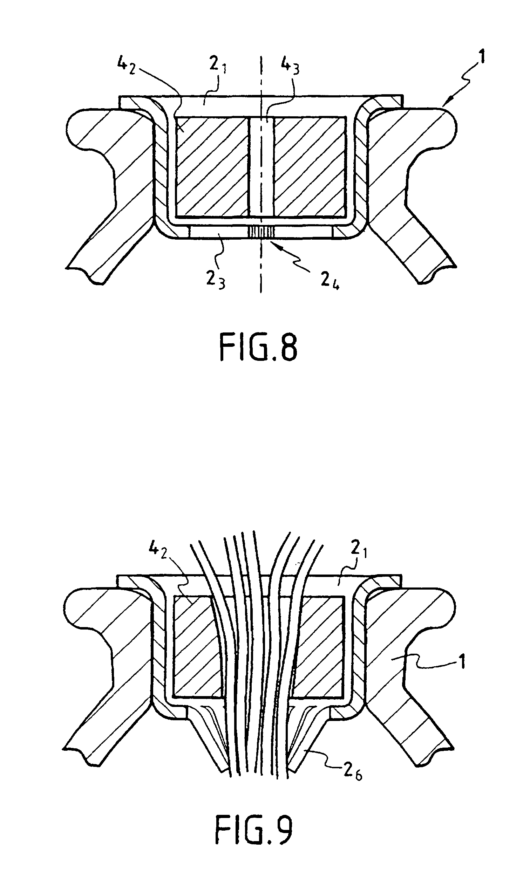

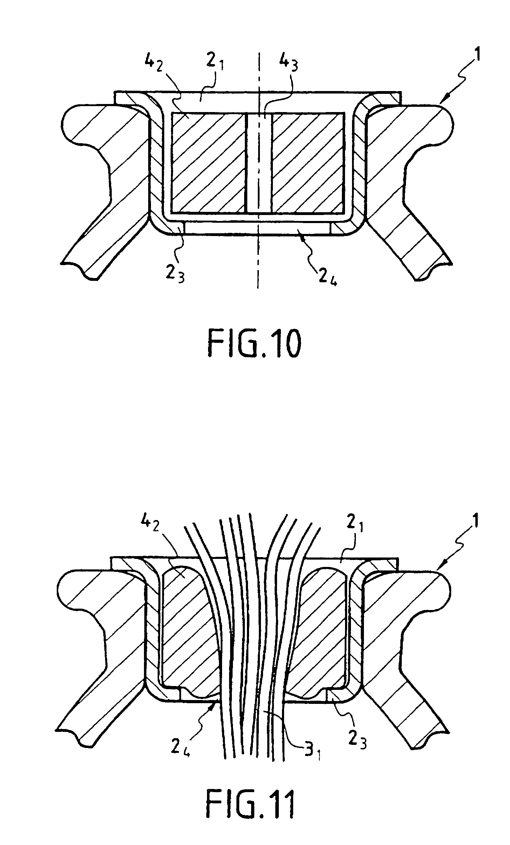

Après remplissage du vase, on met en place le bouchon 2 qui comprend une capsule 2₁ et une rondelle 4₂ en même matériau synthétique hydrophile 4 mais taillé à l'emporte pièce. La capsule 2₁ présente une forme en creux réalisée en matériau plastique, tel que du polyéthylène transparent moulé, avec des bords latéraux 2₂ qui sont ajustés élastiquement dans le col 1₁ du vase et assurent l'étanchéité périphérique entre le vase et le bouchon. Le fond de la capsule 2₃ comporte un percement central 2₄. Selon un mode de réalisation présenté sur les figures 6 à 9 des fentes radiales 2₅ sont prédécoupées en étoile à partir de l'orifice central 2₄. Le fond de la capsule 2₃ comprend des zones pleines 2₆ délimitées par les fentes 2₅ et forme ainsi un diaphragme qui s'entrouvre 2₇ progressivement lors de l'insertion des tiges 3₁ des fleurs dans le vase 1. Selon un autre mode de réalisation représenté sur les figures 10 et 11, le fond de la capsule 2₃ comporte uniquement un orifice central 2₄ de diamètre suffisant pour laisser le passage des tiges 3₁ tout en supportant 2₃ la rondelle 4₂, le diamètre de l'orifice central 2₄ étant alors avantageusement supérieur à celui 4₃ de la rondelle 4₂. Les tiges ligaturées sont mises en place à l'intérieur du vase rempli de copeaux. Les copeaux 4₁ contribuent à la mise en place et au maintien des tiges en position dans le vase. Ainsi, on a observé que si la matière solide est mise en oeuvre sous forme de particules trop fine, notamment de poudre, le matériau devient trop fluide après son humidification et ne concourt pas à une bonne assiette du bouquet. La rondelle 4₂ du bouchon est ajustée à l'intérieur de la capsule 2₁ et comporte elle aussi un orifice central 4₃ permettant l'insertion des tiges 3₁ sans nécessité de les dégrader par contact avec le matériau 4. Par ailleurs, ce matériau 4 qui est relativement friable peut se désagréger en tant que de besoin pour que les tiges puissent adopter une position appropriée une fois leurs extrémités inférieures mises en place dans le vase. Cette rondelle 4₂ complète le bouchage du vase, car elle permet en cas de fuite ou de débordement d'eau à l'intérieur du vase vers l'extérieur, passant par l'orifice 2₄ de la capsule, d'absorber l'eau sortant de l'intérieur du vase par l'orifice 2₄.

Dans un mode préféré de réalisation, ledit vase est en verre minéral. Ce matériau apporte le poids nécessaire pour stabiliser le bouquet, compte tenu de la petite taille du vase, dont la hauteur correspond sensiblement à celle desdites tiges.

Après conditionnement du bouquet dans le vase et vérification de son assiette, on conditionne le vase dans un étui, qui se compose d'un socle 6 et d'une enveloppe 5.

Le socle 6 comprend une embase surmontée de 3 éléments 6₂ en forme de griffe qui se referme élastiquement sur la partie inférieure du vase lorsqu'on adapte celui-ci sur le socle entre ces 3 griffes 6₂.

L'enveloppe 5 forme une boîte comportant des percements circulaires 5₂ dans sa partie supérieure destinée à la ventilation du bouquet. L'enveloppe 5 est surmontée d'un cordon 5₃ permettant la préhension de l'enveloppe, laquelle peut également être facilitée par les percements 5₂. L'enveloppe est réalisée par pliage et thermo-soudage dans une feuille de matériau plastique transparent, tel que du PVC.

Le socle 6 comprend une embase essentiellement parallélépipédique avec des parois latérales 6₁ sur lesquelles viennent s'ajuster élastiquement les extrémités inférieures des parois latérales 5₁ de l'enveloppe 5, l'ajustement élastique se faisant plus particulièrement au niveau des angles, de telle manière qu'il doit permettre de saisir l'enveloppe sans que celle-ci ne se sépare du socle.

Après mise en place du vase sur le socle et fixation de l'enveloppe 5 sur le socle 6, les étuis de conditionnement sont eux-mêmes conditionnés dans des caisses en carton de transport 7 pouvant contenir 12 ou 24 petits bouquets conditionnés dans leur étui . La caisse en carton 7 comprend un couvercle rabattable 7₁ et des percements 7₂ dans ses parois latérales pour en assurer la ventilation intérieure.

Le couvercle 7₁ fermé permet de maintenir les bouquets dans l'obscurité pendant leur transport, ce qui contribue à allonger la durée de vie des fleurs en diminuant la photosynthèse et donc la production d'oxygène et d'éthylène. A l'intérieur de la caisse en carton 7, on insère 7₈ un support en polystyrène thermo-formé 7₄ comportant 24 alvéoles 7₅ destinées à recevoir chacune un étui, chaque alvéole étant sensiblement de même taille, et plutôt légèrement supérieure à celle des étuis pour qui ceux-ci s'y ajustent facilement. Les alvéoles 7₅ ont également espacées les unes des autres pour assurer à la fois un maintien stable des étuis dans les alvéoles et faciliter la circulation d'air et les échanges gazeux entre les étuis à l'intérieur de la caisse 7, ce qui est une condition pour allonger la durée de vie des fleurs. Le carton utilisé est d'une qualité résistant à l'humidité pour prévenir une humidificateur provenant soit de la condensation, soit de l'évaporation produites en cours de stockage ou de transport.

Une fois ouvert, le couvercle 7₁ de la caisse en carton est repliable en partie sur lui-même le long de lignes de pliage 7₃ et de lignes prédécoupées 7₆, de manière à ce qu'il prenne une forme différente plus esthétique, notamment avec un arrondi 7₆. Ainsi, la caisse peut après ouverture du couvercle et pliage sur lui-même 7 de celui-ci, faire office de présentoir des petits bouquets, évitant ainsi un déballage supplémentaire néfaste pour la survie de la plante sur le lieu de vente.

La face avant du couvercle comprend des percements 7₂ situés de telle sorte qu'après pliage du couvercle, ils coïncident avec les percements de la face arrière du fond de la caisse.

D'autres variantes de réalisation sont possibles dans le cadre de l'invention, telle que définie par les revendications, en particulier en utilisant d'autres formes d'enveloppe, vase et/ou socle, mais aussi d'autres formes de bouchons.

## Revendications

1. Petit bouquet de fleurs fraîches (3) conditionné, **caractérisé en ce qu'**il comprend un petit vase (1) comprenant un bouchon (2) traversé par au moins 3 tiges (3₁) de petites fleurs fraîches coupées (3), de préférence 4 à 6 petites fleurs fraîches coupées, dont la longueur des tiges (3₁) est inférieure à 10 cm de préférence inférieur à 5 cm, et dont la corolle (3₂) est de dimension réduite, de préférence de plus grande dimension inférieure à 5 cm, et ledit petit vase (1) est rempli d'un matériau solide hydrophile retenant l'eau (4) à l'intérieur dudit vase, ledit matériau à l'intérieur du vase se présentant sous forme de particules (4₁).

2. Petit bouquet conditionné selon la revendication 1, **caractérisé en ce que** ledit matériau solide retenant l'eau (4) est un matériau synthétique hydrophile poreux ou cellulaire capable de retenir un volume d'eau d'au moins 70 %, de préférence au moins 90 % du volume extérieur apparent dudit matériau solide (4) sec.

3. Petit bouquet conditionné selon la revendication 1 ou 2, **caractérisé en ce que** ledit matériau solide (4) se présente sous forme de particules (4₁) ayant une plus grande dimension de longueur moyenne de 2 à 20 mm, de préférence de 5 à 10 mm.

4. Petit bouquet conditionné selon la revendication 3, **caractérisé en ce que** lesdites particules se présentent sous forme de copeaux ou bâtonnets allongés.

5. Petit bouquet selon l'une des revendications 1 à 4, **caractérisé en ce que** ledit matériau solide (4) est un matériau synthétique de type mousse florale phénolique.

6. Petit bouquet conditionné selon l'une des revendications 1 à 5, **caractérisé en ce que** l'extrémité fleurie comprenant la corolle (3₂) de chacune desdites fleurs (3) occupe une surface dans la direction des fleurs adjacentes inscrite dans un cercle de diamètre inférieur aux 2/3 de la longueur de ladite tige.

7. Petit bouquet conditionné selon l'une des revendications 1 à 6, **caractérisé en ce que** le volume de l'ensemble des extrémités fleuries comprenant les corolles (3₂) dudit petit bouquet s'inscrit dans un cercle de diamètre inférieur à deux fois la longueur desdites tiges (3₁), de préférence inférieure à 10 cm.

8. Petit bouquet conditionné selon l'une des revendication 1 à 7, **caractérisé en ce que** ledit vase est en verre minéral.

9. Petit bouquet conditionné selon l'une des revendications 1 à 8, **caractérisé en ce que** ledit bouchon comprend une capsule (2₁) comprenant des rebords latéraux (2₂) assurant l'étanchéité entre le vase (1) et le bouchon (2), et le fond (2₃) de ladite capsule (2₁) comprend un orifice central (2₄) traversé par lesdites tiges (3₁).

10. Petit bouquet conditionné selon l'une des revendications 1 à 9, **caractérisé en ce que** ladite capsule (2₁) comprend des rebords latéraux (2₂) qui coopèrent élastiquement de façon étanche avec l'intérieur du col (1₁) dudit vase, et le fond (2₃) de ladite capsule comporte des fentes (2₅) ou des lignes prédécoupées disposées radialement autour d'un orifice central (2₄) permettant audit fond (2₃) de s'entrouvrir élastiquement pour permettre le passage desdites tiges (3₁) dans ledit vase.

11. Petit bouquet conditionné selon l'une des revendications 1 à 10, **caractérisé en ce que** le bouchon (2) comprend un élément retenant l'eau (4₂) constitué dans un bloc dedit matériau solide retenant l'eau (4).

12. Petit bouquet conditionné selon la revendication 11, **caractérisé en ce que** ledit bloc (4₂) de matériau solide (4) retenant l'eau est inséré dans une dite capsule (2₁) qui lui sert de réceptacle.

13. Petit bouquet conditionné selon l'une des revendications 11 ou 12, **caractérisé en ce que** ledit bloc (4₂) de matériau solide (4) retenant l'eau est percé en son centre (4₃) pour permettre le passage desdites tiges (3₁).

14. Petit bouquet conditionné selon l'une des revendications 1 à 13, caractérisé en qu'il comprend une enveloppe (5) qui protège l'extrémité fleurie comprenant les corolles (3₂) dudit petit bouquet.

15. Petit bouquet conditionné selon une des revendications 1 à 14, **caractérisé en ce qu'**il comprend un socle (6) sur lequel est adapté ledit vase (1) de manière à le stabiliser.

16. Petit bouquet conditionné selon l'une des revendications 1, 14 ou 15, **caractérisé en ce que** ladite enveloppe (5) coiffe ledit petit bouquet et coopère avec ledit socle (6).

17. Petit bouquet conditionné selon l'une des revendications 14 à 16, **caractérisé en ce que** ladite enveloppe (5) est en forme de boîte parallélépipédique dont les parois latérales (5₁) s'ajustent sur les bords latéraux, de préférence au niveau des angles (6₁) dudit socle (6).

18. Petit bouquet conditionné selon l'une des revendications 14 à 17, **caractérisé en ce que** ladite enveloppe (5) comprend des moyens de préhension (5₂).

19. Petit bouquet conditionné selon une des revendications 14 à 18, **caractérisé en ce que** ladite enveloppe (5) comporte des percements (5₃) dans sa partie supérieure en regard desdites extrémités fleuries.

20. Petit bouquet conditionné selon l'une des revendications 14 à 19, **caractérisé en ce que** ladite enveloppe (5) coopère élastiquement avec ledit socle (6) ou ledit vase (1) de manière à permettre la préhension du petit bouquet conditionné par l'intermédiaire de l'enveloppe (5) sans que ledit vase (1 ) et le cas échéant ledit socle (6) ne s'en désolidarise.

21. Petit bouquet selon l'une des revendications 1 à 20, caractérisé en que lesdites fleurs sont des fleurs de plantes choisies parmi les espèces florales comprenant des roses, oeillets, mimosas, renoncules, violettes, astomerias, bleuets, matricaires, chrysanthèmes, et gouttes de sang.

22. Caisse (7) de transport transformable en présentoir contenant des petits bouquets conditionnés selon l'une des revendications 1 à 21 comprenant un support (7₄) comprenant des alvéoles (7₅), dans lesquelles sont calés et espacés lesdits bouquets conditionnés selon l'une des revendications 1 à 21, **caractérisée en ce qu'**elle comprend un couvercle repliable sur lui-même (7₁), lorsqu'il est ouvert et que la caisse est transformée en présentoir, des percements (7₂) dans le couvercle et ses parois latérales.

23. Procédé de préparation d'un petit bouquet conditionné selon l'une des revendications 1 à 21, **caractérisé en ce que** :
1) on remplit undit vase (1) avec dudit matériau solide hydrophile (4, 4₁) et de l'eau,
2) on met en place sur ledit vase undit bouchon (2),
3) on met en place ledit petit bouquet à l'intérieur dudit vase (1) à travers ledit bouchon, de préférence en faisceau de façon à lui conférer une bonne assiette.

24. Procédé selon la revendication 23, pour préparer un petit bouquet conditionné selon l'une des revendications 15 à 21, **caractérisé en ce qu'**après l'étape 3), on réalise les étapes suivantes dans lesquelles :
4) on met en place ledit vase sur un socle (6), et
5) on met en place unedite enveloppe de protection (5) sur ledit petit bouquet.

25. Procédé selon les revendications 23 à 24, **caractérisé en ce qu'**on met en place lesdits petits bouquets conditionnés dans des caisses de transport servant de présentoir (7).

26. Procédé de récolte d'un petit bouquet de fleurs fraîches coupées, **caractérisé en ce que** :
a) lors de la récolte, on coupe des petites fleurs (3) avec une tige (3₁) comprenant un unique bouton floral au stade de début d'épanouissement de la corolle (3₂), dont la longueur de tige (3₁) est inférieure à 10 cm, de préférence inférieure à 5 cm, et dont lesdites fleurs donnent des corolles (3₂) de dimension réduite, de préférence des corolles dont la plus grande dimension en début d'épanouissement est inférieure à 3 cm, et
b) on constitue, aussitôt après leur récolte, des petits bouquets avec au moins 3 desdites petites fleurs coupées (3) dont les tiges (3₁) sont sensiblement de même longueur, et comprenant de préférence de 4 à 6 fleurs, et
c) on met en place lesdits petits bouquets dans des bacs de ramassage (8) comportant des compartiments individualisés (8₁), calibrés de façon à recevoir chacun un petit bouquet et permettant de maintenir les tiges (3₁) desdits petits bouquets dans l'eau dès leur récolte.

27. Procédé selon la revendications 26, **caractérisé en ce que** l'on coupe successivement plusieurs fleurs (3) sur un même pied de plante, de préférence sur les différentes ramifications d'une même tige principale dudit pied au fur et à mesure de l'apparition desdits boutons floraux audit état de prématurité, de préférence au début de l'épanouissement de la corolle dès leur récolte.

28. Procédé selon l'une des revendications 26 ou 27, **caractérisé en ce que** l'on récolte lesdites fleurs sur des plantes sélectionnées pour donner des corolles (3₂) de dimensions réduites, de préférence des corolles (3₂) dont la plus grande dimension en début d'épanouissement est inférieure à 3 cm.

29. Procédé selon l'une des revendications 26 à 28, **caractérisé en ce que** l'on coupe des fleurs sur des plantes à tiges ramifiées, de préférence sélectionnées pour fournir un nombre accru de ramifications.

30. Procédé selon l'une des revendications 26 à 29, caractérisé en que lesdites fleurs sont des fleurs de plantes choisies parmi les espèces florales comprenant des roses, oeillets, mimosas, renoncules, violettes, astomerias, bleuets, matricaires, chrysanthèmes, et gouttes de sang.

31. Bac de ramassage (8) de fleurs fraîches coupées (3) utile dans le procédé selon l'une des revendications 26 à 30, **caractérisé en ce qu'**il comprend une caisse (9) en matière plastique rigide empilable comprenant un élément réceptacle de calibrage (8) amovible et jetable comprenant des compartiments individualisés (8₁) de dimensions calibrées en hauteur et en largeur pour recevoir chacun undit petit bouquet et lesdits compartiments sont espacés de manière à permettre une bonne circulation d'air entre les extrémités fleuries desdits petits bouquets.

32. Bac de ramassage selon la revendication 31, **caractérisé en ce que** lesdits compartiments (8₁) communiquent entre eux (8₂) de manière à permettre une circulation d'eau entre les compartiments lorsqu'ils sont remplis d'eau.

33. Bac de ramassage selon la revendication 31 ou 32, **caractérisé en ce que** lesdits compartiments (8₁) définissent un plan comprenant des orifices (8₄) de préférence circulaires, de sorte que lorsque lesdites tiges desdits bouquets sont introduites dans lesdits orifices, lesdits boutons floraux dépassent au-dessus dudit plan et peuvent reposer sur une partie pleine (8₃) dudit plan entourant lesdits orifices (8₄).

34. Bac de ramassage selon l'une des revendications 31 à 33, **caractérisé en ce que** ledit élément de calibrage (8) comprend une plaque ou feuille de matériau plastique dans laquelle des compartiments (8₁) de type godet, reposant sur le fond de ladite caisse, sont thermo-formés.

## Patentansprüche

1. Kleiner verpackter Strauß frischer Blumen (3), **dadurch gekennzeichnet, dass** er eine kleine Vase (1) umfasst, die einen Stöpsel (2) aufweist, durch den hindurch mindestens 3 Stiele (3₁) kleiner frischer Schnittblumen (3), vorzugsweise 4 bis 6 kleine frische Schnittblumen, verlaufen, deren Stiellänge (3₁) kleiner als 10 cm, vorzugsweise kleiner als 5 cm ist und deren Blütenkrone (3₂) verringerte Abmessungen hat, wobei vorzugsweise die größten Abmessungen kleiner als 5 cm sind, und dass die kleine Vase (1) mit einem festen hydrophilen Material gefüllt ist, das das Wasser (4) im Inneren der Vase hält, wobei das Material im Inneren der Vase in Form von Teilchen (4₁) vorliegt ist.

2. Kleiner verpackter Blumenstrauß nach Anspruch 1, **dadurch gekennzeichnet, dass** das das Wasser (4) zurückhaltende feste Material ein poröses oder zellulares hydrophiles synthetisches Material ist, das ein Wasservolumen von mindestens 70 %, vorzugsweise mindestens 90 % des äußeren Schüttvolumens des trockenen festen Materials (4) zurückhalten kann.

3. Kleiner verpackter Blumenstrauß nach Anspruch 1 oder 2, **dadurch gekennzeichnet, dass** das feste Material (4) in Form von Teilchen (4₁) mit einer größten durchschnittlichen Längsausdehnung von 2 bis 20 mm, vorzugsweise von 5 bis 10 mm vorliegt.

4. Kleiner verpackter Blumenstrauß nach Anspruch 3, **dadurch gekennzeichnet, dass** die Teilchen in Form von Spänen oder länglichen Stäbchen vorliegen.

5. Kleiner Blumenstrauß nach einem der Ansprüche 1 bis 4, **dadurch gekennzeichnet, dass** das feste Material (4) ein synthetisches Material vom Typ Blumenphenolharzschaum ist.

6. Kleiner verpackter Blumenstrauß nach einem der Ansprüche 1 bis 5, **dadurch gekennzeichnet, dass** das blühende Ende, das die Blütenkrone (3₂) jeder der Blumen (3) umfasst, eine Fläche in Richtung der angrenzenden Blumen einnimmt, die in einen Kreis mit einem Durchmesser von weniger als 2/3 der Länge des Stiels eingeschrieben ist.

7. Kleiner verpackter Blumenstrauß nach einem der Ansprüche 1 bis 6, **dadurch gekennzeichnet, dass** das Volumen der Gesamtheit der blühenden Enden, die die Blütenkronen (3₂) des kleinen Blumenstraußes umfasst, in einen Kreis mit einem geringeren Durchmesser als zweimal die Länge der Stiele (3₁), vorzugsweise geringer als 10 cm eingeschrieben ist.

8. Kleiner verpackter Blumenstrauß nach einem der Ansprüche 1 bis 7, **dadurch gekennzeichnet, dass** die Vase aus Mineralglas ist.

9. Kleiner verpackter Blumenstrauß nach einem der Ansprüche 1 bis 8, **dadurch gekennzeichnet, dass** der Stöpsel eine Kapsel (2₁) umfasst, die seitliche Randleisten (2₂) aufweist, die die Dichtigkeit zwischen der Vase (1) und dem Stöpsel (2) sicher stellen, und dass der Boden (2₃) der Kapsel (2₁) eine Mittelöffnung (2₄) umfasst, durch die hindurch die Stiele (3₁) verlaufen.

10. Kleiner verpackter Blumenstrauß nach einem der Ansprüche 1 bis 9, **dadurch gekennzeichnet, dass** die Kapsel (2₁) seitliche Randleisten (2₂) umfasst, die elastisch auf dichte Weise mit dem Inneren des Halses (1₁) der Vase zusammenwirken, und dass der Boden (2₃) der Kapsel Schlitze (2₅) oder vorausgeschnittene Linien umfasst, die radial um die Mittelöffnung (2₄) angeordnet sind und es dem Boden (2₃) ermöglichen, sich elastisch zu öffnen, um den Durchgang der Stiele (3₁) in die Vase zu ermöglichen.

11. Kleiner verpackter Blumenstrauß nach einem der Ansprüche 1 bis 10, **dadurch gekennzeichnet, dass** der Stöpsel (2) ein das Wasser zurückhaltendes Element (4₂) umfasst, das in einem Block des das Wasser zurückhaltenden festen Materials (4) ausgebildet ist.

12. Kleiner verpackter Blumenstrauß nach Anspruch 11, **dadurch gekennzeichnet, dass** der Block (4₂) aus dem das Wasser zurückhaltenden festen Material (4) in eine sogenannte Kapsel (2₁) eingesetzt ist, die ihm als Behälter dient.

13. Kleiner verpackter Blumenstrauß nach einem der Ansprüche 11 oder 12, **dadurch gekennzeichnet, dass** der Block (4₂) aus dem das Wasser zurückhaltendem festen Material (4) in seiner Mitte (4₃) durchbohrt ist, um den Durchgang der Stiele (3₁) zu ermöglichen.

14. Kleiner verpackter Blumenstrauß nach einem der Ansprüche 1 bis 13, **dadurch gekennzeichnet, dass** er eine Hülle (5) umfasst, die das die Blütenkronen (3₂) umfassende blühende Ende des kleinen Straußes schützt.

15. Kleiner verpackter Blumenstrauß nach einem der Ansprüche 1 bis 14, **dadurch gekennzeichnet, dass** er einen Sockel (6) umfasst, auf den die Vase (1) angepasst ist, um sie zu stabilisieren.

16. Kleiner verpackter Blumenstrauß nach einem der Ansprüche 1, 14 oder 15, **dadurch gekennzeichnet, dass** die Hülle (5) den kleinen Strauß bedeckt und mit dem Sockel (6) zusammenwirkt.

17. Kleiner verpackter Blumenstrauß nach einem der Ansprüche 14 bis 16, **dadurch gekennzeichnet, dass** die Hülle (5) die Form einer parallelepipedischen Schachtel hat, deren Seitenwände (5₁) sich an die Seitenränder des Sockels (6) vorzugsweise auf Höhe der Ecken (6₁) anpassen.

18. Kleiner verpackter Blumenstrauß nach einem der Ansprüche 14 bis 17, **dadurch gekennzeichnet, dass** die Hülle (5) Greifmittel (5₂) umfasst.

19. Kleiner verpackter Blumenstrauß nach einem der Ansprüche 14 bis 18, **dadurch gekennzeichnet, dass** die Hülle (5) Bohrungen (5₃) in ihrem oberen Teil gegenüber den blühenden Enden umfasst.

20. Kleiner verpackter Blumenstrauß nach einem der Ansprüche 14 bis 19, **dadurch gekennzeichnet, dass** die Hülle (5) elastisch mit dem Sockel (6) oder der Vase (1) zusammenwirkt, um das Ergreifen des kleinen verpackten Blumenstraußes über die Hülle (5) zu ermöglichen, ohne dass sich die Vase (1) und gegebenenfalls der Sockel (6) davon lösen.

21. Kleiner Blumenstrauß nach einem der Ansprüche 1 bis 20, **dadurch gekennzeichnet, dass** die Blumen von Pflanzen stammen, die unter den Blumengattungen ausgewählt werden, die Rosen, Nelken, Mimosen, Hahnenfuß, Veilchen, Astomerias, Kornblumen, Kamillen, Chrysanthemen und Blutstropfen umfassen.

22. Transportschachtel (7), die in eine Präsentationsschachtel umgewandelt werden kann und kleine verpackte Blumensträuße nach einem der Ansprüche 1 bis 21 enthält, umfassend eine Stütze (7₄) mit Waben (7₅), in denen die verpackten Blumensträuße nach einem der Ansprüche 1 bis 21 verkeilt und in einem Abstand angeordnet sind, **dadurch gekennzeichnet, dass** sie einen beim Öffnen und Umwandeln der Schachtel in eine Präsentationsschachtel auf sich selbst aufklappbaren Deckel (7₁) und Bohrungen (7₂) im Deckel und ihren Seitenwänden umfasst.

23. Verfahren zur Vorbereitung eines kleinen verpackten Blumenstraußes nach einem der Ansprüche 1 bis 21, **dadurch gekennzeichnet, dass**:
1) eine Vase (1) mit dem festen hydrophilen Material (4, 4₁) und mit Wasser gefüllt wird,
2) auf der Vase ein Stöpsel (2) angebracht wird,
3) der kleine Blumenstrauß im Inneren der Vase (1) durch den Stöpsel vorzugsweise bündelartig angeordnet wird, um ihm eine gute Verankerung zu verleihen.

24. Verfahren nach Anspruch 23 zur Vorbereitung eines kleinen verpackten Blumenstraußes nach einem der Ansprüche 15 bis 21, **dadurch gekennzeichnet, dass** nach Schritt 3) die folgenden Schritte durchgeführt werden, in denen:
4) die Vase auf einem Sockel (6) angeordnet wird, und
5) eine Schutzhülle (5) auf dem kleinen Blumenstrauß angeordnet wird.

25. Verfahren nach den Ansprüchen 23 bis 24, **dadurch gekennzeichnet, dass** die kleinen verpackten Blumensträuße in Transportschachteln angeordnet werden, die als Präsentationsschachteln (7) dienen.

26. Verfahren zum Pflücken eines kleinen Straußes von frischen Schnittblumen, **dadurch gekennzeichnet, dass**:
a) beim Pflücken kleine Blumen (3) mit einem Stiel (3₁) abgeschnitten werden, die einen einzigen Blütenkopf im Anfangsstadium des Aufgehens der Blütenkrone (3₂) umfassen, deren Stiellänge (3₁) kleiner als 10 cm, vorzugsweise kleiner als 5 cm ist und deren Blüten Blütenkronen (3₂) mit verringerter Abmessung ergeben, vorzugsweise Blütenkronen, deren größte Abmessung im Anfangsstadium des Aufgehens geringer als 3 cm ist, und
b) sofort nach ihrem Pflücken kleine Sträuße mit mindestens 3 der kleinen Schnittblumen (3) gebildet werden, deren Stiele (3₁) im Wesentlichen dieselbe Länge haben, wobei die Sträuße vorzugsweise 4 bis 6 Blumen umfassen, und
c) die kleinen Sträuße in Sammelbehältern (8) angeordnet werden, die Einzelabteilungen (8,) umfassen, die derart kalibriert sind, dass sie jeweils einen kleinen Strauß aufnehmen und es ermöglichen, die Stiele (3₁) der kleinen Sträuße nach ihrem Pflücken im Wasser zu halten.

27. Verfahren nach Anspruch 26, **dadurch gekennzeichnet, dass** nacheinander mehrere Blumen (3) vom selben Pflanzenstock, vorzugsweise von den verschiedenen Verästelungen desselben Hauptstiels des Stocks im Zuge des Auftretens der Blütenköpfe im Vorreifestadium, vorzugsweise im Anfangsstadium des Aufgehens der Blütenkrone bei ihrem Pflücken abgeschnitten werden.

28. Verfahren nach einem der Ansprüche 26 oder 27, **dadurch gekennzeichnet, dass** die Blumen von ausgewählten Pflanzen gepflückt werden, um Blütenkronen (3₂) mit verringerten Abmessungen zu erhalten, vorzugsweise Blütenkronen (3₂), deren größte Abmessung im Anfangsstadium des Aufgehens geringer als 3 cm ist.

29. Verfahren nach einem der Ansprüche 26 bis 28, **dadurch gekennzeichnet, dass** Blumen von Pflanzen mit verästelten vorzugsweise zum Erhalten einer erhöhten Zahl an Verästelungen ausgewählten Stielen abgeschnitten werden.

30. Verfahren nach einem der Ansprüche 26 bis 29, **dadurch gekennzeichnet, dass** die Blumen von Pflanzen stammen, die unter den Blumengattungen, die Rosen, Nelken, Mimosen, Hahnenfuß, Veilchen, Astomerias, Kornblumen, Kamillen, Chrysanthemen und Blutstropfen umfassen, ausgewählt werden.

31. Sammelbehälter (8) für frische Schnittblumen (3), der bei den Verfahren nach einem der Ansprüche 26 bis 30 verwendet wird, **dadurch gekennzeichnet, dass** er eine Schachtel (9) aus festem stapelbarem Kunststoff umfasst, die ein abnehmbares und wegwerfbares kalibriertes Behälterelement (8) umfasst, das Einzelabteilungen (8₁) mit hinsichtlich Höhe und Breite kalibrierten Abmessungen aufweist, um jeweils einen kleinen Strauß aufzunehmen, und dass die Abteilungen in einem derartigen Abstand zueinander angeordnet sind, dass sie eine gute Luftzirkulation zwischen den blühenden Enden der kleinen Sträuße ermöglichen.

32. Sammelbehälter nach Anspruch 31, **dadurch gekennzeichnet, dass** die Abteilungen (8₁) miteinander (8₂) in Verbindung stehen, um, wenn sie mit Wasser gefüllt sind, eine Wasserzirkulation zwischen den Abteilungen zu ermöglichen.

33. Sammelbehälter nach Anspruch 31 oder 32, **dadurch gekennzeichnet, dass** die Abteilungen (8₁) eine Ebene mit vorzugsweise kreisförmigen Öffnungen (8₄) definieren, so dass, wenn die Stiele der Sträuße in die Öffnungen eingeführt werden, die Blütenköpfe über die Ebene hinausragen und auf einem vollen Teil (8₃) der Ebene liegen können, der die Öffnungen (8₄) umgibt.

34. Sammelbehälter nach einem der Ansprüche 31 bis 33, **dadurch gekennzeichnet, dass** das kalibrierte Element (8) eine Platte oder Folie aus Kunststoff umfasst, in der die Abteilungen (8₁) von napfartiger Form, die auf dem Boden der Schachtel stehen, thermogeformt sind.

## Claims

1. A packaged small bunch of fresh flowers (3), **characterized in that** it comprises a small vase (1) provided with a stopper (2) that passes at least three stems (3₁) of fresh-cut small flowers (3), preferably four to six fresh-cut small flowers, of which the length of the stems (3₁) is less than 10 cm, and preferably less than 5 cm, and whose head (3₂) is of small size, and preferably having a largest dimension that is less than 5 cm, and said small vase (1) is filled with a water-retaining hydrophilic solid material (4) inside said vase, said material inside the vase being in the form of particles (4₁).

2. A packaged small bunch according to claim 1, **characterized in that** said water-retaining solid material (4) is a porous or cellular hydrophilic synthetic material capable of retaining a volume of water of at least 70% and preferably at least 90% of the apparent outside volume of said solid material (4) as dry.

3. A packaged small bunch according to claim 1 or claim 2, **characterized in that** said solid material (4) is in the form of particles (4₁) having a largest dimension whose mean length lies in the range 2 mm to 20 mm, and preferably in the range 5 mm to 10 mm.

4. A packaged small bunch according to claim 3, **characterized in that** said particles are in the form of elongate chips or sticks.

5. A small bunch according to any one of claims 1 to 4, **characterized in that** said solid material (4) is a synthetic material of the phenolic floral foam type.

6. A packaged small bunch according to any one of claims 1 to 5, **characterized in that** the flowering end having the head (3₂) of each of said flowers (3) occupies an area extending towards the adjacent flowers that lies within a circle of diameter smaller than 2/3 of the length of said stem.

7. A packaged small bunch according to any one of claims 1 to 6, **characterized in that** the volume of all of the flowering ends having the heads (3₂) of said small bunch lies within a circle of diameter smaller than twice the length of said stems (3₁), and preferably less than 10 cm.

8. A packaged small bunch according to any one of claims 1 to 7, **characterized in that** said vase is made of mineral glass.

9. A packaged small bunch according to any one of claims 1 to 8, **characterized in that** said stopper comprises a cap (2₁) having side edges (2₂) providing sealing between the vase (1) and the stopper (2), and the bottom (2₃) of said cap (2₁) is provided with a central orifice (2₄) through which said stems (3₁) pass.

10. A packaged small bunch according to any one of claims 1 to 9, **characterized in that** said cap (2₁) has side edges (2₂) which co-operate resiliently in leaktight manner with the inside of the neck (1₁) of said vase, and the bottom (2₃) of said cap is provided with slits (2₅) or pre-cut lines disposed radially around a central orifice (2₄) enabling said bottom (2₃) to open up resiliently so that said stems (3₁) can pass through into said vase.

11. A packaged small bunch according to any one of claims 1 to 10, **characterized in that** the stopper (2) includes a water-retaining element (4₂) made from a block of said water-retaining solid material (4).

12. A packaged small bunch according to claim 11, **characterized in that** said block (4₂) of water-retaining solid material (4) is inserted in a said cap (2₁) which serves as a receptacle for it.

13. A packaged small bunch according to any one of claims 11 or 12, **characterized in that** said block (4₂) of water-retaining solid material (4) is provided which a hole at its center (4₃) to enable said stems (3₁) to pass through it.

14. A packaged small bunch according to any one of claims 1 to 13, **characterized in that** it comprises a cover (5) which protects the flowering end having the heads (3₂) of said small bunch.

15. A packaged small bunch according to any one of claims 1 to 14, **characterized in that** it further comprises a stand (6) to which said vase (1) is fitted in order to stabilize it.

16. A packaged small bunch according to any one of claims 1, 14, or 15, **characterized in that** said cover (5) covers said small bunch and co-operates with said stand (6).

17. A packaged small bunch according to any one of claims 14 to 16, **characterized in that** said cover (5) is in the form of a rectangular block shaped box whose side walls (5₁) fit onto the side edges of said stand (6) preferably at the comers (6₁) thereof.

18. A packaged small bunch according to any one of claims 14 to 17, **characterized in that** said cover (5) is provided with handhold means (5₂).

19. A packaged small bunch according to any one of claims 14 to 18, **characterized in that** said cover (5) is provided with holes (5₃) in its top portion facing said flowering ends.

20. A packaged small bunch according to any one of claims 14 to 19, **characterized in that** said cover (5) co-operates resiliently with said stand (6) or said vase (1) in a manner such as to make it possible to take hold of the packaged small bunch via the cover (5) without said vase (1) and, where applicable, said stand (6) being disunited from said cover.

21. A small bunch according to any one of claims 1 to 20, **characterized in that** said flowers are flowers of plants chosen from floral species comprising roses, carnations, mimosas, renunculuses, violets, astroemerias, comflowers, feverfews, chrysanthemums, and adonises.

22. A transport box (7) transformable into a display module and containing packaged small bunches according to any one of claims 1 to 21, which box is provided with a support (7₄) provided with recesses (7₅) inside which said packaged small bunches according to any one of claims 1 to 21 are wedged and spaced apart, said box being **characterized in that** it is further provided with a lid (7₁) suitable for being folded back on itself when it is open, and when the box is transformed into a display module, and it is further provided with holes (7₂) in its lid and in its side walls.

23. A method of preparing a packaged small bunch according to any one of claims 1 to 21, said method being **characterized in that**:
1) a said vase (1) is filled with said hydrophilic solid material (4, 4₁) and with water;
2) a said stopper (2) is put in place in said vase;
3) said small bunch is put in place inside said vase (1) through said stopper, preferably in a bundle so that it stands at the proper angle.

24. A method according to claim 23, for preparing a packaged small bunch according to any one of claims 15 to 21, said method being **characterized in that**, after step 3), the following steps are performed, in which:
4) said vase is put in place on a stand (6); and
5) a said protective cover (5) is put in place over said small bunch.

25. A method according to claim 23 or 24, **characterized in that** said packaged small bunches are put in place in transport boxes serving as display modules (7).

26. A method of picking a small bunch of fresh-cut flowers, said method being **characterized in that**:
a) during picking, small flowers (3) are cut with each stem (3₁) having a single bud at the stage at which the head (3₂) is starting to come into bloom, the length of the stem (3₁) being less than 10 cm, and preferably less than 5 cm, and said flowers giving heads (3₂) of small size, and preferably heads whose largest dimension at the start of blooming is less than 3 cm;
b) as soon as they have been picked, small bunches of flowers are made up, each bunch being made up of at least three of said cut flowers (3) whose stems (3₁) are of substantially the same length, and preferably being made up of four to six flowers; and
c) said small bunches are put in place in collection trays (8) having individualized compartments (8₁), calibrated so that each compartment is suitable for receiving one small bunch, and making it possible for the stems (3₁) of said small bunches to be kept in water as soon as they have been picked.

27. A method according to claim 26, **characterized in that** a plurality of small flowers (3) are cut successively from the same plant stock, preferably from various ramifications off the same main stem of said stock, as said buds appear at said state of prematurity, preferably with the heads starting to bloom as soon as the flowers are picked.

28. A method according to claim 26 or 27, **characterized in that** said flowers are picked from plants selected to give heads (3₂) of small size, and preferably heads (3₂) whose largest dimension at the start of blooming is less than 3 cm.

29. A method according to any one of claims 26 to 28, **characterized in that** flowers are cut from plants having ramifying stems, preferably selected to deliver an increased number of ramifications.

30. A method according to any one of claims 26 to 29, **characterized in that** said flowers are flowers of plants chosen from the floral species comprising roses, carnations, mimosas, renunculuses, violets, astroemerias, comflowers, feverfews, chrysanthemums, and adonises.

31. A collection tray (8) for collecting fresh-cut flowers (3) and that is useful in a method according to any one of claims 26 to 30, said collection tray being **characterized in that** it comprises a stackable crate (9) made of a rigid plastics material and containing a calibration receptacle element (8) that is removable and disposable, and that is provided with individualized compartments (8₁) of dimensions calibrated in height and in width so that each compartment is suitable for receiving a said small bunch and said compartments are spaced apart so as to enable air to flow well between the flowering ends of said small bunches.

32. A collection tray according to claim 31, **characterized in that** said compartments (8₁) communicate with one another (8₂) so as to enable water to flow between the compartments when they are filled with water.

33. A collection tray according to claim 31 or 32, **characterized in that** said compartments (8₁) define a surface provided with preferably circular orifices (8₄) so that when said stems of said bunches are inserted into said orifices, said buds project above said surface and can rest on an uninterrupted portion (8₃) of said surface surrounding said orifices (8₄).

34. A collection tray according to any one of claims 31 to 33, **characterized in that** said calibration element (8) comprises a plate or sheet of plastics material in which compartments (8₁) of the cup type, resting on the bottom of said crate, are thermoformed.
